# EUROPEAN PATENT SPECIFICATION

(11) **EP 1 810 773 B1**
(45) Date of publication and mention of the grant of the patent: **28.06.2017**
(21) Application number: 05800292.4
(22) Date of filing: 04.11.2005
(51) Int. Cl.: B23K 11/14, B23P 19/00

(54) **PROJECTION NUT FEEDER**
BUCKELMUTTERZUFÜHRVORRICHTUNG
CHARGEUR A ECROU A PROJECTION

(30) Priority: 13.11.2004 JP 2004359103
(43) Date of publication of application: 25.07.2007
(73) Proprietor: Aoyama, Yoshitaka, Sakai-shi, Osaka 590-0114 (JP)
(72) Inventor: AOYAMA, Yoshitaka, Osaka 590-0114 (JP); AOYAMA, Shoji, Osaka 590-0114 (JP)
(74) Representative: Arth, Hans-Lothar
(86) International application number: PCT/JP2005/020284
(87) International publication number: WO 2006/051738

(56) References cited:
- JP-A- 2004 202 570
- JP-Y2- 56 014 943
- US-A- 5 074 742
- US-A- 5 191 691

## Description

### TECHNICAL FIELD

The present invention relates to the use of a device for feeding projection nuts to the guide pin of a fixed electrode.

### BACKGROUND ART

A conventional technique will be described with reference to Figs. 2 - 5 utilizing a projection nut feeding device as disclosed in Japanese Patent Application JP 2004 202570 A. Figs. 3 (A) and 3 (B) show a projection nut 1 being normally fed to a guide pin 3. The projection nut 1 in this conventional technique is of a type in which a sealing cover 4 is attached to the upper end of a threaded hole 2. Such sealing cover 4 is used, in the case where the projection nut 1 is welded to the lower surface of the floor panel of an automobile, to prevent sound proofing paint applied to said lower surface from entering the threaded hole 2. In addition, those which are shown by the reference character 5 are projections for welding.

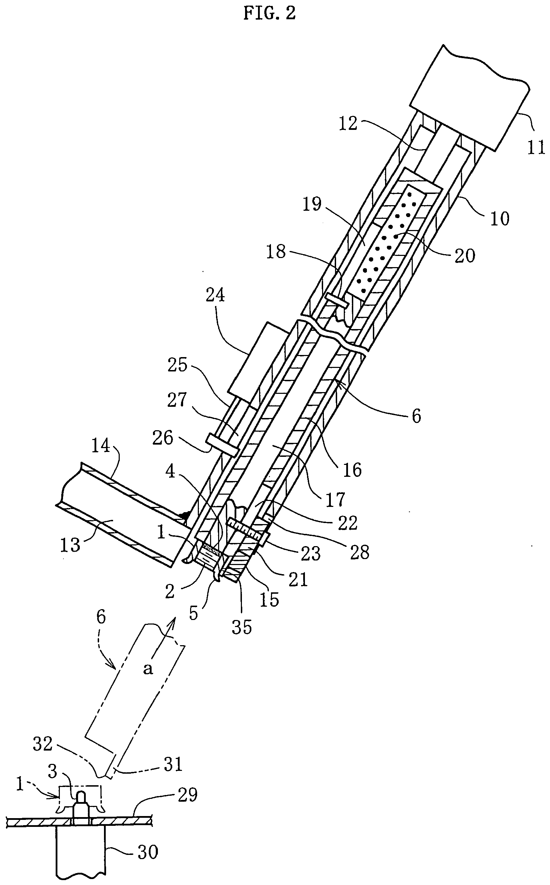

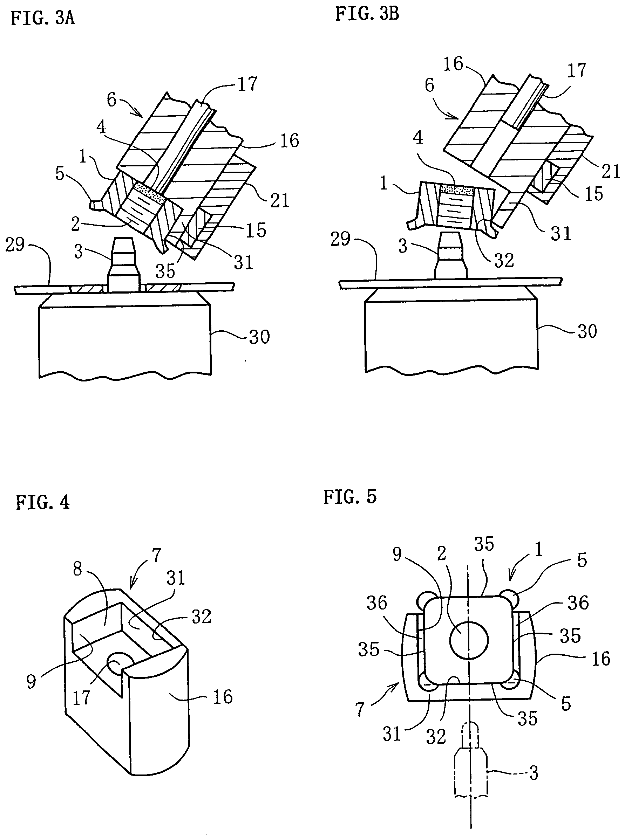

A feed rod 6, which is of an advance-retraction type, is provided at its front end with a surrounding wall 7 (shown in the most easily understandable way in Fig. 4) for the projection nut 1, the inside space serving as a storage section 8 for the nut 1, the side into which parts advance being an open space 9 allowing the nut 1 to pass therethrough. As shown in Fig. 2, the feed rod 6 is stored in an outer sleeve 10, and the piston rod 12 of an air cylinder 11 joined to the end of the outer sleeve 10 is joined to the feed rod 6 so that the operation of the air cylinder 11 may allow the feed rod 6 to advance and retract.

Parts feeding passage 13 is defined by a metal pipe 14 rectangular in cross section to transfer a multi-sided projection nut 1 which is in square form, as shown in Figs. 3A, 3(B), and 5. Fig. 5 is an a-arrowed view in Fig. 2. As shown in Fig. 5, the multi-sided projection nut 1 is square in shape as seen axially of the threaded hole 2 and has four side surfaces 35. The metal pipe 14 for feeding the nut 1 is welded at its front end to the outer sleeve 10 (Fig. 2). The end of the metal pipe 14 opens in close proximity to the front end of the feed rod 6, and the opening in the storage section 8 is opposed to this opening in the metal pipe 14, allowing the nut 1 from the metal pipe 14 to smoothly advance into the storage section 8.

As shown in Fig. 5, the width of the open space 9 is set larger than the width of the nut 1 to allow the nut 1 to smoothly advance into the storage section 8. Consequently, clearances 36 are defined left and right of the nut 1. In the case of Fig. 5, since the nut 1 is positioned in the middle of the open space 9 (storage section 8), the clearances 36 exist left and right of the nut 1.

In order to allow smooth travel of the nut 1 moving from the parts feeding passage 13 to the storage section 9, a magnet (permanent magnet) 15 is installed on the side of the surrounding wall 7 opposite to the open space 8. In order for the feed rod 6 to advance to make the nut 1 reach its destination as shown in two-dot chain lines in Fig. 2, the attractive force exerted by the magnet 15 on the nut 1 must be destroyed. To describe an arrangement to realize this, the feed rod 6 has a double structure consisting of a hollow shaft 16 and an inner shaft 17 slidably inserted therein, with a control pin 18 fixed to said inner shaft 17, said control pin 18 projecting outside through an elongated opening 19 formed in the hollow shaft 16 in the stroke direction. The elastic force of a coil spring 20 inserted in the hollow shaft 16 acts on the inner shaft 17, whereby the control pin 18 abuts against the lower end of the elongated opening 19.

The magnet 15 is embedded in a slide piece 21, and a bolt 23 extending through an elongated opening 22 formed in the hollow shaft 16 is integrates with the slide piece 21 with the inner shaft 17. On the other hand, an air cylinder 24 is fixed to the outer side surface of the outer sleeve 10, with a locking piece 26 attached to the piston rod 26 of said air cylinder 24. The locking piece 26 projects into the outer sleeve 10 through an elongated opening 27 formed in the outer sleeve 10 in the stroke direction. The relative position between the two is so set that when the feed rod 6 advances, the control pin 18 stops immediately in front of the locking pieces 26.

In addition, the outer sleeve 10 is provided with a notch 28 to prevent the slide piece 21 from interfering with the outer sleeve 10. The destination of the nut 1 is, in the case of Fig. 2, a mating steel plate part 27 to which it is to be projection-welded. The steel plate part 29 is mounted on a fixed electrode 30 and has the guide pin 3 passing therethrough. In order to make the magnetic force act on the nut 1 more strongly, the hollow shaft 16, inner shaft 17, slide piece 21, and the like are appropriately made of such a nonmagnetic material as stainless steel.

When the magnet 15 is attractively holding the projection nut 1 at the front end of the feed rod 6, the nut 1 has been reliably held at the front end surface of the feed rod 6. And, at this time, as shown in Fig. 3A, the inner surface of the projecting piece 31 is in intimate contact with one of the outer side surfaces 35 from below. In this state of intimate contact, a front end edge 32 (see Fig. 3B and 4) is positioned on the front end side of the outer side surfaces of the nut 1, and the relative position therebetween is thus set.

The front end edge 32 is linear, and this straight line is parallel with the horizontal plane. In Figs. 2, 3, 3A, and 3B, since the flat plate-like steel plate part 29 is horizontally supported, the front end edge 32 is parallel with the steel plate part 29.

The operation of said arrangement will be described. The output of the air cylinder causes the feed rod 6 to advance. At this time the nut 1 remains held in the storage section 8 by the magnet 15. When the nut 1 comes immediately in front of the guide pin 3, the advance of the feed rod 6 is stopped. (See Fig. 3A). Then, the locking piece 26 is pulled up by the air cylinder 24, its displacement is transmitted to the slide piece 21 successively through the control pin 18, inner shaft 17, and bolt 23, and as shown in Fig. 3B, the magnet 15 is kept away from the nut 1. Therefore, the attractive force on the nut 1 is destroyed, letting the nut 1 fall onto the steel plate part 29 while making a downward arcuate travel with the center at the front end edge 32; the guide pin 3 has assumed a state of relative advance into the threaded hole 2, as shown in two-dot chain lines in Fig. 2.

With the nut feeding thus completed, the feed rod 6 returns to the solid line position in Fig. 2, being ready for receiving the next nut. In addition, in consideration of peripheral obstructions, said feed rod 6 is sometimes further tilted downward almost to the horizontal. Patent Document 1: Japanese Patent No. 2547593.

### DISCLOSURE OF THE INVENTION

### PROBLEMS TO BE SOLVED BY THE INVENTION

However, with the arrangement described above, as shown in Fig. 3B, when the magnet 15 is moved away from the nut 1 to have the attractive force on the nut 1 destroyed, there occurs a phenomenon such that the nut 1 is shifted widthwise, that is, substantially perpendicularly to the paper of Fig. 3. For example, when the front end edge 32 is slightly sloped instead of being parallel with the horizontal, the nut shifts to one side in a transition period during which the nut 1 executes an arcuate movement with the center at the front end edge 32. That is, the clearance 36 of Fig. 5 exists on one side alone, so that it follows that the center of the threaded hole 2 deviates from the guide pin 3. Therefore, the guide pin 3 fails to correctly fit in the threaded hole 2, and when the nut 1 falls while executing an arcuate movement, it is thrown off by the guide pin 3, making normal nut feeding impossible.

The invention, which has been accomplished to solve such problems, has for its object the provision of a use of a projection nut feeding device as disclosed in JP 2004 202570 A ensuring that a threaded hole in a projection nut accurately coincides with an electrode guide pin.

### MEANS FOR SOLVING THE PROBLEMS

A use according to the invention of a projection nut feeding device includes a feed rod (6) provided at its front end with a projecting piece (31) for supporting a multi-sided projection nut (1) from below, the arrangement being such that said feed rod (6) is advanced obliquely downward or substantially horizontally while temporarily holding a projection nut (1) at its front end, the advance of the feed rod (6) being stopped immediately in front of the guide pin (3) of a fixed electrode or when the front end of the guide pin (3) has been slightly inserted in a threaded hole in the projection nut (1), the temporary holding force on the projection nut (1) being destroyed substantially simultaneously with said stoppage, thereby toppling the projection nut (1) under its own weight with the front end edge of the projecting piece serving as the center for toppling, so as to fit on the guide pin (3) of the fixed electrode, said projection nut feeding device being characterized in that the inner side of said projecting piece (31) is formed with crossed support surfaces (27) for supporting the outer side surfaces of the projection nut (1) and in that the corner lines at the place where the two support surfaces (27) cross each other are arranged to be directed to the underside of said feed rod (6).

### EFFECTS OF THE INVENTION

Therefore, when the nut is supported by the projecting piece, the outer side surfaces of the nut comes in intimate contact with the two support surfaces of the projecting piece, so that the relative position between the threaded hole and the corner lines is correctly set. Thereby, the relative position between the threaded hole and the guide pin of the electrode is also accurately set. That is, since the relative position between the feed rod and the guide pin has been accurately set in advance, the relative position between the threaded hole and the projecting piece (corner lines) is accurately set by said intimate contact with the support surfaces, whereby the relative position between the threaded hole and the guide pin is ultimately accurately set; thus, the abnormal feeding such that the nut is thrown off by the guide pin as described above is prevented. The setting of the relative position between the threaded hole and the guide pin is made possible since the corner lines are arranged to be directed to the underside of the feed rod; thus, the nut travels under its own weight toward the corner lines and the support position is determined.

As to the temporary holding force on the projection nut, it may be obtained by utilizing magnetic force. By utilizing magnetic force, the nut can be accurately positioned in the portion of the projecting piece which is bent by using a simple structure.

Utilization of the magnetic force of a magnet as the temporary holding force makes it possible to destroy the attractive magnetic force on the projection nut by keeping the magnet away from the nut. Therefore, the attractive magnetic force can be easily destroyed simply by moving the magnet, so that the nut can be reliably fed to the guide pin.

### BRIEF DESCRIPTION OF THE DRAWINGS

Fig. 1A is a bottom view, showing an embodiment of the inventive use;
Fig. 1B is a bottom view of a projecting piece (31) shown in Fig. 1A;
Fig. 1C is a bottom view showing a modification of the projecting piece (31);
Fig. 1D is a bottom view of a modification of the projecting piece (31);
Fig. 1E is a sectional view taken along the line E-E in Fig. 1D;
Fig. 2 is a longitudinal sectional view showing a conventional prior art feeding device in its entirety;
Fig. 3A is a longitudinal sectional view showing the nut feeding process in the prior art device shown in Fig. 2;
Fig. 3B is a longitudinal sectional view showing the prior art nut feeding process in the device shown in Fig. 2;
Fig. 4 is a perspective view of the front end portion of a feed rod in the prior art device shown in Fig. 2; and
Fig. 5 is an a-arrowed view of the prior art device shown in Fig. 2.

### BEST MODE FOR -CARRYING OUT THE INVENTION

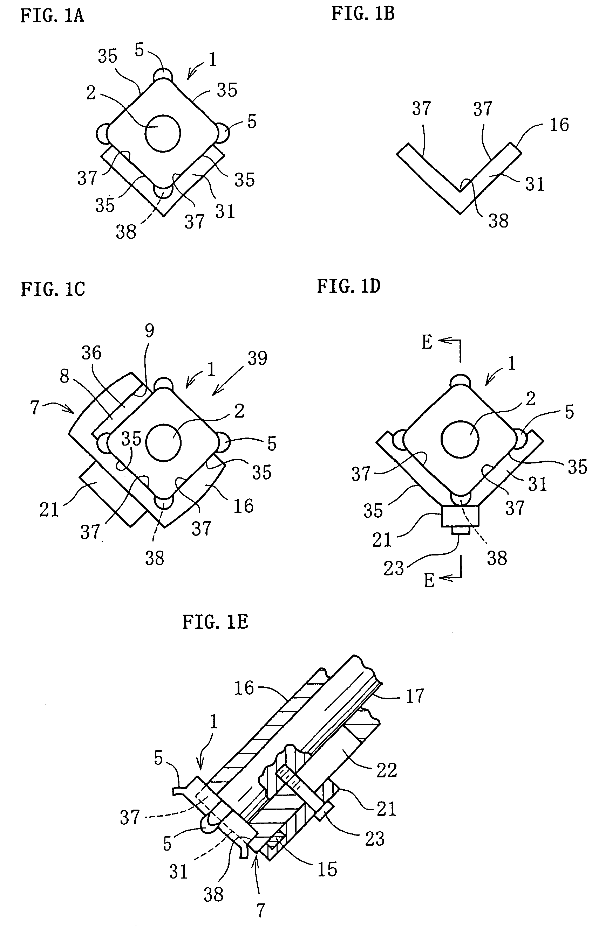

The inventive use of the projection nut feeding device as disclosed in JP 2004 202570 A is based on an improved attractively holding the nut 1 at the front end of the feed rod, the rest being the same as in the device described above shown in Figs. 2 - 5. Therefore, in the following, a description will be given of the configuration of the projecting piece 31 constituting part of the surrounding wall 7 with reference to Figs. 1A - 1E. Concerning the rest of the arrangement, the matter described with reference to Figs. 3 - 5 will be quoted.

Fig. 1A corresponds to the a-arrowed view in Fig. 2, and the projecting piece 31 of Fig. 1A alone is shown in Fig. 1B . The projecting piece 31 in this case is in the form of a steel plate bent by an angle of substantially 90 degrees and internally formed with crossed support surfaces 37 for supporting the adjacent outer side surfaces 35 of the nut 1. And, the corner where the two support surfaces 37 cross each other has corner lines 38, that is, lines formed in the deepest place of a valley defined by the two support surfaces 37, said corner lines 38 being directed to the underside of the feed rod 6. "The underside of the feed rod 6" is set when the feed rod is formed with a vertical relationship by the sloping feed rod 6 or is set when the feed rod is formed with a vertical relationship by the substantially horizontally disposed feed rod 6.

Here, it is only necessary for the inner side surfaces of the projecting piece 31, that is, the pair of support surfaces 37 to form an angle of substantially 90 degrees, whatever their outer shape may be. Further, the corner lines 38 refer to lines produced when the pair of support surfaces 37 constituting the inner wall surface of the projecting piece 31 cross each other, but said lines may be imaginary lines. In other words, it is not absolutely necessary for the pair of support surfaces 37 to be continuous; for example, there may be an opening along the corner lines 38.

When the nut 1 is supported by the projecting piece 31 shaped as shown in Figs. 1A and 1B, the adjacent outer side surfaces 35 of the nut 1 come in intimate contact with the two support surfaces 37 on the projecting piece 31 side, so that the relative position between the threaded hole 2 and the corner lines 38 is correctly set. Thereby, the relative position between the threaded hole 2 and the guide pin 3 is accurately set.

The example shown in Fig. 1C shows an arrangement in which the surrounding wall 7 of the structure shown in Fig. 5 is turned by an angle of 45 degrees. To effect such angular conversion, the entire feeding device shown in Fig. 2 is turned by an angle of 45 degrees around the axis of the feed rod 6. The a-arrowed view showing such turning corresponds to Fig. 1C. Such angular conversion forms the inner surface of the surrounding wall 7 with adjacent support surfaces 37 and also forms the corner lines 38 in the portion where the two support surfaces 37 cross each other.

When the nut 1 advances to the open space 9 (storage section 8) as it is subjected to the attractive force of the magnet 15 from the direction of arrow 39 in Fig. 1C, the nut 1 travels under its own weight, with the adjacent outer side surfaces 35 brought to intimate contact with the support surfaces 37. Therefore, it follows that the clearance 36 exists on one side alone. Consequently, the two adjacent support surfaces 37 support the nut 1 from below, so that stabilized nut support can be secured. And, since the relative position between the threaded hole 2 and the corner lines 38 is accurately set, the relative position between the threaded hole 2 and the guide pin 3 is maintained in the normal state, ensuring that the nut 1 reliably fits on the guide pin 3.

Fig. 1D is a bottom view with the magnet 15 disposed under the corner lines 38, that is, the view corresponds to the a-arrowed view in Fig. 2. Fig. 1E is an E-E sectional view in Fig. 1D. Therefore, as shown in Fig. 1E, the elongated opening 22 is disposed such that it extends obliquely upwardly of the corner lines 38 along the axis of the feed rod 6. With the above arrangement thus made, the nut 1 is attracted toward the corner lines 38 by the magnet 15, and the adjacent outer side surfaces 35 of the nut 1 come in intimate contact with the adjacent support surfaces 37, in which manner the relative position between the threaded hole 2 and the corner lines 38 is accurately set.

In the above embodiment, the magnetic force of the magnet 15 is utilized to attract the nut 1. However, in place of this or in some cases in addition to this, negative air pressure may be utilized. To this end, though not shown, a suction hole will be opened in the vicinity of the corner lines 38, and an air hose will be connected at one end thereof to said suction hole and at the other end to a suction pump. Further, an air open/close control valve will be installed somewhere between the ends of the air hose, the arrangement being such that when the feed rod 6 advances and stops at a predetermined position, the negative air pressure is switched to open air to destroy the attractive force at the place of the corner lines 38.

In the above embodiment, a quadrangular projection nut has been exemplified. However, the inventive method is likewise applicable to other multi-sided projection nuts, such as hexagonal nuts.

The functions and effects of the above embodiment are as follows.

When the nut 1 is supported by the bent projection piece 31, the adjacent outer side surfaces of the nut 1 come in intimate contact with the two support surfaces 37 on the projecting piece 31 side, in which manner the relative position between the threaded hole 2 and the corner lines 38 is correctly set. Thereby, the relative position between the threaded hole 2 and the guide pin 3 is accurately set. That is, since the relative position between the feed rod 6 and the guide pin 3 has been accurately set in advance, the relative position between the threaded hole 2 and the projecting piece 31 (corner lines 38) is accurately set by said intimate contact with the support surfaces 37, whereby the relative position between the threaded hole 2 and the guide pin 3 is ultimately accurately set; thus, the abnormal feeding such that the nut 1 is thrown off by the guide pin 3 as described above can be prevented.

The setting of the relative position between the nut 1 and the projecting piece 31 is made possible since the corner lines 38 are arranged to be directed to the underside of the feed rod 6; thus, the nut 1 travels under its own weight toward the corner lines 38 and the support position is determined.

Since the attractive force on the projection nut 1 is secured by the attractive magnetic force of the magnet 15, the nut 1 can be accurately positioned in the portion of the projection piece 31 which is bent by using a simple structure.

Since the attractive magnetic force on the projection nut 1 can be destroyed by keeping the magnet 15 away from the projection nut 1, the attractive magnetic force can be easily destroyed simply by moving the magnet 15, so that the nut 1 can be reliably fed to the guide pin 3.

When the entire feeding device is turned by an angle of, for example, 45 degrees to be changed to the form shown in Fig. 1C, a swing displacement corresponding to said turning angle is obtained also in the metal pipe 14 fixed to the outer sleeve 10 and extending obliquely upward. Such swing displacement makes it possible for the metal pipe 14 to avoid interfering with various members existing in the neighborhood, an advantage in a layout aspect in welding facilities where related members are in an intricately mixed state.

### INDUSTRIAL APPLICABILITY

The welding of projection nuts has been practiced in a whole range of fields. Being capable of highly reliable nut feeding, the invention can be expected to be utilized in a wide range of industrial fields.

## Claims

1. Use of a projection nut feeding device including a feed rod (6) provided at its front end with a projecting piece (31) for supporting a multi-sided projection nut from below, the arrangement being such that said feed rod (6) is advanced obliquely downward or substantially horizontally while temporarily holding a projection nut (1) at its front end, the advance of the feed rod (6) being stopped immediately in front of the guide pin (3) of a fixed electrode or when the front end of the guide pin (3) has been slightly inserted in a threaded hole in the projection nut (1), the temporary holding force on the projection nut being destroyed substantially simultaneously with said stoppage, thereby toppling the projection nut under its own weight with the front end edge of the projecting piece (31) serving as the center for toppling, so as to fit on the guide pin (3) of the fixed electrode, said projection nut feeding device being **characterized in that** the inner side of said projecting piece (31) is formed with crossed support surfaces (27) for supporting the outer side surfaces (35) of the projection nut (1) and **in that** corner lines (38) at the place where the two support surfaces (27) cross each other are arranged to be directed to the underside of said feed rod (6).

2. Use as set forth in Claim 1, wherein said temporary holding force on the projection nut (1) is ascribed to a magnetic force.

3. Use as set forth in Claim 2, wherein the attractive force on the projection nut (1) is destroyed by keeping the magnet (15) generating said magnetic force away from the projection nut (1).

## Patentansprüche

1. Verwendung einer Vorrichtung zur Zuführung von Buckelmuttern einschließlich eines an seinem Vorderende mit einem Buckelstück (31) ausgestatteten Vorschubelements (6) zur Stützung einer mehrseitigen Buckelmutter von unten, die Anordnung so ausgestaltet, dass besagtes Vorschubelement (6) während des temporären Haltens einer Buckelmutter (1) an seinem Vorderende schräg nach unten oder im Wesentlichen horizontal vorgeschoben wird, das Vorschieben des Vorschubelements (6) vor dem Führungsstift (3) einer festen Elektrode oder, wenn das Vorderende des Führungsstifts (3) leicht in das Gewindeloch der Buckelmutter (1) eingeführt wurde, sofort anhält, die temporäre Haltekraft auf die Buckelmutter wesentlich gleichzeitig mit besagtem Anhalten zerstört wird, wodurch die Buckelmutter unter ihrem eigenem Gewicht mit der als Zentrum fürs Kippen dienenden Vorderendenkante des Buckelstücks (31) kippt, sodass sie auf den Führungsstift (3) der festen Elektrode passt, besagte Vorrichtung zur Zuführung von Buckelmuttern **dadurch gekennzeichnet, dass** die Innenseite des besagten Buckelstücks (31) mit kreuzweise angeordneten Auflageflächen (37) zum Stützen der Außenseitenflächen (31) der Buckelmutter (1) gebildet wird und dass die Ecklinien (38) an der Stelle, an der die beiden Auflageflächen (37) einander kreuzen in Richtung Unterseite des besagten Vorschubelements (6) angeordnet sind.

2. Verwendung gemäß Anspruch 1, wobei besagte temporäre Haltekraft auf die Buckelmutter (1) einer magnetischen Kraft zugeschrieben wird.

3. Verwendung gemäß Anspruch 2, wobei die Anziehungskraft auf die Buckelmutter (1) durch Fernhalten des besagte magnetische Kraft erzeugenden Magneten (15) von der Buckelmutter (1).

## Revendications

1. Utilisation d'un dispositif d'alimentation en écrou de projection comprenant une tige d'alimentation (6) prévue à son extrémité avant avec une pièce saillante (31) pour supporter un écrou de projection multiface en dessous, l'agencement étant tel que ladite tige d'alimentation (6) est avancée obliquement vers le bas ou sensiblement horizontalement tout en maintenant temporairement un écrou de projection (1) à son extrémité avant, l'avancement de la tige d'alimentation (6) étant immédiatement arrêté devant la goupille de guidage (3) d'une électrode fixe ou lorsque l'extrémité avant de la goupille de guidage (3) a été légèrement insérée dans un trou fileté de l'écrou de projection (1), la force de maintien temporaire agissant sur l'écrou de projection étant détruite sensiblement simultanément avec ledit arrêt, renversant ainsi l'écrou de projection sous son propre poids avec le bord de l'extrémité avant de la pièce saillante (31) servant de centre de renversement, de manière à s'adapter sur la goupille de guidage (3) de l'électrode fixe, ledit dispositif d'alimentation en écrou de projection étant **caractérisé en ce que** le côté intérieur de ladite pièce saillante (31) est formé de surfaces de support croisées (37) pour supporter les surfaces latérales extérieures (35) de l'écrou de projection (1) et **en ce que** des lignes d'angle (38) à l'endroit où les deux surfaces de support (37) se croisent, sont disposées pour être dirigées vers la partie inférieure de ladite tige d'alimentation (6).

2. Utilisation selon la revendication 1, dans laquelle ladite force de maintien temporaire agissant sur l'écrou de projection (1) est attribuée à une force magnétique.

3. Utilisation selon la revendication 2, dans laquelle la force d'attraction agissant sur l'écrou de projection (1) est détruite en maintenant l'aimant (15) générant ladite force magnétique loin de l'écrou de projection (1).
